# EUROPÄISCHE PATENTSCHRIFT

(11) **EP 2 886 949 B1**
(45) Veröffentlichungstag und Bekanntmachung des Hinweises auf die Patenterteilung: **20.02.2019**
(21) Anmeldenummer: 14002184.1
(22) Anmeldetag: 26.06.2014
(51) Int. Cl.: F21V 31/04, F21S 4/22, F21Y 115/10, F21Y 103/10, B29L 31/00, B29C 39/00

(54) **HORIZONTAL ODER VERTIKAL BIEGEELASTISCHE LEUCHTDIODENBÄNDER MIT HOMOGENEM LICHTAUSTRITT UND VERFAHREN ZU DEREN HERSTELLUNG**
HORIZONTALLY OR VERTICALLY FLEXIBLE LIGHT EMITTING DIODE STRIPS WITH HOMOGENEOUS LIGHT OUTPUT AND METHOD FOR THEIR PRODUCTION
BANDES DE DIODES LUMINESCENTES ÉLASTIQUES HORIZONTALES OU VERTICALES ÉQUIPÉES D'UNE SORTIE DE LUMIÈRE HOMOGÈNE ET LEUR PROCÉDÉ DE FABRICATION

(30) Priorität: 15.11.2013 DE 102013019037; 15.11.2013 DE 102013019039
(43) Veröffentlichungstag der Anmeldung: 24.06.2015
(60) Teilanmeldung: 18020123.8
(73) Patentinhaber: Josef Barthelme GmbH & Co. KG, 90491 Nürnberg (DE)
(72) Erfinder: Barthelme, Nicola, 90425 Nürnberg (DE); Eistetter, Stefan, 90425 Nürnberg (DE); Astrup, Hans, 91056 Erlangen/Dechsendorf (DE)
(74) Vertreter: Dreykorn-Lindner, Werner

(56) Entgegenhaltungen:
- EP-A2- 2 241 797
- CN-U- 202 791 560
- DE-A1-102011 075 531
- DE-U1-202009 002 127

## Beschreibung

Die Erfindung betrifft, gemäß dem Oberbegriff des Patentanspruchs 1, ein Leuchtdiodenband mit einem U-förmigen Gehäuse, mit auf einem vertikal zur Erstreckungsrichtung flexiblen Leitungsträger montierten Chip-Leuchtdioden und mit zwei in Abstrahlrichtung der Chip-Leuchtdioden übereinander und zwischen den beiden Schenkeln des Gehäuses angeordnete Vergußmassen. Weiterhin betrifft die Erfindung, gemäß Patentanspruch 11 ein Verfahren zu deren Herstellung.

Leuchtdiodenbänder sind seit langem bekannt. Beispielsweise ist aus der DE 20 2009 002127 U1 eine LED-Leuchte, umfassend ein Gehäuse, d.h. eine U-förmige Gussform, welche mehrere, auf einem bandförmigen, insbesondere flexiblen Leitungsträger beabstandet zueinander angeordnete Chip-Leuchtdioden umgibt, bekannt. Die U-förmige Gussform, d.h. bei der DE 20 2009 002127 U1 als Gehäuseunterteil mit einen U-förmigen Querschnitt bezeichnet, weist also den auf dem inneren Bodenbereich aufliegend angeordneten Leitungsträger (LED-Leiste) auf. Um den Punkteffekt bei der visuellen Wahrnehmung der Leuchte zu verhindern und diese im Feuchtraumbereich oder auch im Außenbereich einsetzen zu können, weisen die zwei einander in einem Abstand gegenüberliegenden Wandschenkel jeweils ein oberes Ende auf, welches von innen nach außen verjüngend ausgebildet ist und wobei der innere Querschnitt des Gehäuseunterteils zumindest teilweise mit wenigstens einer ersten, transparenten Vergußmasse bis zum Beginn der Verjüngung und ab der Verjüngung mit einer zweiten, opaken Vergußmasse gefüllt ist, die einen Gehäusedeckel ausbildet. Aufgrund der oberen Begrenzung an den Enden der seitlichen Wandschenkel ist hier unter Berücksichtigung der Oberflächenspannung dieser Vergußmasse die Menge der Vergußmasse beim Befüllen derart bemessen, dass sich in der U-förmigen Gussform eine plane, ebene Oberfläche oder konvexe bzw. konkave Oberfläche der opaken zweiten Vergußmasse ergibt. Demnach kann das von den Leuchtdioden emittierte Licht zunächst durch den transparenten Bereich der ersten Vergußmasse ungehindert bis zur Unterseite der zweiten Vergußmasse gelangen, wo es in diese eindringt und aufgrund der Opazität, beispielsweise hervorgerufen durch Streupartikel in der Masse, stark gestreut wird und somit an der Oberfläche der zweiten Vergußmasse ein gleichmäßiges leuchtendes Erscheinungsbild, insbesondere ähnlich einer Neonleuchte, wenn bei einer Ausführungsform die U-förmige Gussform aus einem opaken, insbesondere durchpigmentierten Material besteht, erzielt wird. Die horizontal in Erstreckungsrichtung verlaufende Trennlinie zwischen der ersten Vergußmasse und der zweiten Vergußmasse liegt am Beginn der Verjüngung, wobei die erste Vergußmasse nach dem Aushärten den Boden der u-förmigen Vergußform für die zweite Vergußmasse bildet. Durch die Befüllung der offenen U-förmigen Gussform mit erster und zweiter Vergußmasse besteht beim Aushärten der jeweiligen Vergußmasse die Gefahr von äußeren Einzügen durch Schrumpfen (wobei zur Schwundkompensation Vergußmasse nachgefüllt werden könnte) und beim zu schnellen Eingießen in die Gussform besteht die Gefahr von Lufteinschlüssen, dies in Abhängigkeit der Viskosität.

Weitere Beispiele für einen 2-Schichtaufbau sind bekannt; siehe DE 60 2004 004 350 T2, diese zeigt zwei transparente Substratabschnitte sowie einen davor angeordneten Lichtstreuungskörper, oder DE 10 2009 054 474 A1, diese zeigt eine erste Vergußmasse (beispielsweise aus Hotmelt mit farbigen Füllstoffen) und eine die Lichtaustrittsfläche abdeckende, lichtdurchlässige (transparent oder transluzent (opak)) zweite Vergußmasse (beispielsweise aus Hotmelt), wobei ein Kühlkörper zumindest teilweise mit der zweiten Vergußmasse umgossen ist, oder DE 20 2012 009416 U1, diese zeigt einen u-förmigen Träger für das spätere Einfüllen zweier Vergußmassen (gleiches oder unterschiedliches Basismaterial z.B. Silikon mit gleichen oderunterschiedlichen Füllstoffen, wobei die untere blickdicht und die obere zur Homogenisierung des abgestrahlten Lichts transluzent ist) und eine bandförmige flexible Leiterplatte, wodurch eine insgesamt elastisch verformbare Leuchtvorrichtung bereitgestellt werden kann.

Eine technische Alternative zum dem aus der DE 20 2009 002 127 U1 bereits bekannten LED-Band, mit welcher das bislang nicht mögliche Biegen um eine Hochachse (z-Richtung) des LED-Bandes verwirklicht werden soll, ist aus der DE 10 2012 110136 A1 bekannt, welche gegenüber der Priorität nachveröffentlicht ist. Das LED-Band weist eine Vielzahl von Leuchtdioden auf, die in einer Reihe angeordnet sind und in einem flexiblen langgestreckten Gehäuse eingegossen sind. Das Gehäuse bildet eine, insbesondere U-förmige oder V-förmige, Gussform aus, die zwei sich nach oben (z-Richtung) erstreckende Seitenwandungen umfasst, d.h. mit zwei sich nach oben zur offenen Seite der Gussform erstreckenden Seitenwandungen, die in einem unteren Bereich, insbesondere durch einen Boden, miteinander verbunden sind. Die Leuchtdioden werden in die Gussform eingebracht; die Gussform wird anschließend mit Vergußmasse befüllt. Von unten nach oben (in z-Richtung) betrachtet, wird die Gussform bis zu einer Markierung, d.h. eine durch zumindest eine an einer Seitenwandung horizontal verlaufende Markierungskante, wobei der unmittelbar oberhalb der Markierungskante anschließende Wandabschnitt der Seitenwandung vertikal ausgerichtet ist oder weiter als die Markierungskante in den Innenraum (der Gussform) hineinragt (auch zur Ausbildung eines zumindest teilweise "unstetigen" Übergangs von einem oberen Wandabschnitt zu einem unteren Wandabschnitt der Seitenwandung), mit einer ersten Vergußmasse befüllt. Ab der Markierung ist die Gussform mit einer zweiten Vergußmasse befüllt. Dabei können auch weitere Vergußmassen oberhalb bzw. unterhalb der Markierung angeordnet sein. An der Markierung bildet sich eine horizontale Grenzlinie zwischen erster und zweiter Vergußmasse aus, wobei die erste Vergußmasse nach dem Aushärten den Boden der Vergußform für die zweite Vergußmasse bildet. Die erste Vergußmasse ist insbesondere eine transparente Vergußmasse; die zweite Vergußmasse ist insbesondere eine opake Vergußmasse. Als Vergußmassen eigenen sich grundsätzlich Polyurethan(PU)-Werkstoffe. Insbesondere ist nun die Markierung durch zumindest eine an einer der Seitenwandungen, insbesondere an beiden der Seitenwandungen, horizontal verlaufende Markierungskante gebildet. Der sich unmittelbar oberhalb der Markierungskante anschließende Wandabschnitt der Seitenwandung ist vertikal ausgerichtet oder ragt weiter als die Markierungskante in den Innenraum hinein. Dabei kann der unmittelbar oberhalb der Markierungskante anschließender Wandabschnitt der Seitenwandung weiter in den Innenraum der Gussform hineinragen als ein unmittelbar unterhalb der Markierungskante anschließender Abschnitt der Seitenwandung. Die Seitenwandung ist zwingend einstückig und eine gute Einstellbarkeit tritt insbesondere dann ein, wenn an beiden Seitenwandungen eine horizontal verlaufende Markierungskante angeordnet ist, wobei beide Markierungskanten auf der gleichen vertikalen Position (z-Richtung) angeordnet sind. In einer bevorzugten Ausgestaltung eines LED-Bandes, sind benachbarte Leuchtdioden in drei Freiheitsgraden gelenkig miteinander verbunden. Hierzu sind die benachbarten Leuchtdioden ausschließlich durch freiliegende Kabelleitungen miteinander verbunden und sind nicht auf einem Leitungsband oder auf einer bandförmigen Platine befestigt. Es ist ersichtlich, dass die freiliegenden Kabelleitungen für sich genommen Drehungen und Biegungen in allen Richtungen erlauben. Freiliegend bedeutet dabei, dass diese Kabelleitung (=Litze + Isolation der Litze) vor dem Eingießen von keinem Material umschlossen waren; nach dem Eingießen können die freiliegenden Kabel aber durch die Vergußmasse umschlossen sein. Ein Kabel kann mehrere Kabelleitungen umfassen.

Wie die vorstehende Würdigung des Standes der Technik aufzeigt, sind unterschiedlich ausgestaltete flexible LED-Ketten/LED-Leisten bekannt, welche in der Regel nur in eine Richtung biegbar sind und ebenfalls nur in eine Richtung leuchten. Jedoch fehlt in der Praxis eine flexible LED-Kette/LED-Leiste für den Innen-, Außen- sowie Unterwasserbereich mit einer Schutzart von bis zu IP68, welche einen homogenen Lichtaustritt von über 180° (seitliche Abstrahlung), eine verbesserte Lichtausbeute und eine effektive Wärmeabfuhr hat. Besonders bedeutsam ist dies, weil die Beleuchtungsmittel herstellende Industrie als fortschrittliche, entwicklungsfreudige Industrie anzusehen ist, die schnell Verbesserungen und Vereinfachungen aufgreift und in die Tat umsetzt.

Der Erfindung liegt gegenüber den bekannten Leuchtdiodenbändern die Aufgabe zugrunde, diese derart weiterzuentwickeln, dass dem Benutzer ein flexibles, d.h. biegbares Leuchtdiodenband zur Verfügung gestellt wird, welches einen Abstrahlwinkel bis 180° mit einem homogenen Lichtaustritt, eine verbesserte Lichtausbeute und eine effektive Wärmeabfuhr aufweist und baukastenartig aufgebaut werden kann.

Diese Aufgabe wird, gemäß kennzeichnenden Teil des Patentanspruchs 1, dadurch gelöst, dass mindestens der erste Schenkel des U-förmigen Gehäuses aus transluzenter, in der Wandstärke sich verjüngender und in das Kunststoffmaterial des Gehäuses übergehenden zweiten Vergußmasse besteht, dass der flexible Leitungsträger in einer ersten transparenten Vergußmasse eingebettet ist und dass das Licht der Chip-Leuchtdioden von den Innenflächen des Gehäuses reflektiert und durch die zweite Vergußmasse diffus abgestrahlt wird, wobei das Leuchtdiodenband in Erstreckungsrichtung biegeelastisch ist.

Die erfindungsgemäßen Leuchtdiodenbänder weisen die Vorteile auf, dass diese beispielsweise an Fassaden montiert werden können, um Konturen flexibel Nachzuzeichnen (vertikal biegbar) und homogen zu leuchten, dass diese durch die neuartigen Kühleigenschaften eine deutlich längere Lebensdauer haben und dass diese baukastenartig aus Deckel (Lichtaustritt) und U-förmiges Gehäuse zusammengesetzt werden können. Da die LED schon heute effizienter ist als die Leuchtstofflampe kann hier in der Fassadenbeleuchtung ebenfalls sehr viel Energie zukünftig eingespart werden. Weiterhin können Neonschriftzüge ersetzt werden, da die erfindungsgemäßen Leuchtdiodenbänder deutlich effizienter sind und die Lichtaustrittsfläche beliebige Formen mit einer qualitativ hochwertigen Oberfläche annehmen kann. Insbesondere weisen die erfindungsgemäßen Leuchtdiodenbänder die Vorteile einer gleichmäßigen (d.h. ohne verjüngende Kanten) transluzenten Deckschicht, welche das Licht im bis über 180°-Winkel abstrahlt (seitliche Abstrahlung) und einer optimalen Wärmeabführung (Chip-Leuchtdioden) auf.

Weiterhin wird diese Aufgabe, bei einem Verfahren gemäß Patentanspruch 11, gelöst, bei dem:
a) eine zweite flüssige transluzente Vergußmasse in eine nach einer Seite hin offenen Vergußform, deren Konturenverlauf als sich von dieser Seite senkrecht erstreckende Schenkel und einem zur offenen Stirnseite sich erhebenden Füllrand ausgestaltet ist, derart eingefüllt wird, dass diese zwischen dem Füllrand und einer Überlaufkante der Vergußform eine aufgrund des Kapillareffekts gekrümmte Oberfläche ausbildet,
b) das Kunststoffmaterial des Gehäuses bis zur Überlaufkante der Vergußform eingefüllt wird und dabei den ersten Schenkel und die Basis des U-förmigen Gehäuses ausbildet,
c) der flexible Leitungsträger mit den montierten Chip-Leuchtdioden in das U-förmige Gehäuse an der Basis eingelegt,
d) die erste Vergußmasse bis zum inneren Rand der Basis und dem gegenüberliegenden Rand der zweiten Vergußmasse eingefüllt wird und
e) der zweite Schenkel des U-förmigen Gehäuses bis zum äußeren Rand der Basis und dem gegenüberliegenden Rand der zweiten Vergußmasse eingefüllt wird.

Dadurch, dass beim erfindungsgemäßen Verfahren gemäß Patentanspruch 11 die transluzente Schicht (zweite Vergußmasse) als erstes gegossen wird, ist die lichtemittierende Schicht an der Oberfläche matt und nicht hochglänzend ausgeprägt, wie es beim Stand der Technik, beispielsweise der DE 20 2009 002127 U1, der Fall ist. Zudem besteht beim Aushärten der zweiten Vergußmasse kaum die Gefahr von Einzügen auf der Oberfläche durch Schrumpfen. Weiterhin kann die Lichtaustrittsfläche beliebige Formen annehmen, da diese zuerst gegossen wird und das baukastenartige Zusammensetzen des erfindungsgemäßen Leuchtdiodenbands aus Deckel (Lichtaustritt) und U-förmigen Gehäuse ermöglicht auf überraschend einfache Art und Weise die einzelnen Teile entsprechend der gewünschten Funktion (Wärmeleitung, Pigmentierung, Profilierung, Lichtaustritt) auszugestalten. Somit ist keine Zulieferung eines U-förmigen Gehäuses, wie beim Gegenstand der DE 20 2009 002127 U1, erforderlich und die erfindungsgemäßen Leuchtdiodenbänder können automatisch unter erhöhter Fertigungskontrolle (Reinraum) produziert werden, wobei auch konvexe oder konkave Oberflächen der Teile des Leuchtdiodenbands mit größer als 3mm gegenüber der Horizontalen ohne weiteres möglich sind.

Bei einer bevorzugten Ausgestaltung der Erfindung weist, gemäß Patentanspruch 5, der erste Schenkel eine an das Ende der zweiten Vergußmasse angrenzende Nut auf.

Diese Ausgestaltung der Erfindung weist den Vorteil auf, dass die Position des Übergangs, die Wandstärke im Bereich des Übergangs und dessen Verlauf definiert eingestellt werden kann. Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- FIG. 1: eine erste Ausführungsform des Leuchtdiodenbands,
- FIG. 2: den ersten Verfahrensschritt, nämlich das Gießen der transluzenten, seitlich abstrahlenden Schicht (zweite Vergußmasse),
- FIG. 3: den zweiten Verfahrensschritt, nämlich das Gießen des U-förmigen Gehäuses mit Reflektoren,
- FIG. 4: das U-förmige Gehäuse nach dem Entformen,
- FIG. 5: den dritten Verfahrensschritt, nämlich das Einkleben des LED-Moduls/Leitungsträgers mit Klebeband an der Basis des Gehäuses,
- FIG. 6: den vierten Verfahrensschritt, nämlich das Gießen der ersten transparenten Vergußmasse bis zur Reflektorhöhe,
- FIG. 7: die Vergußform zum Leuchtdiodenband nach FIG. 1 im Schnitt,
- FIG. 8: eine zweite Ausführungsform einer Vergußform im Schnitt und
- FIG. 9: das Leuchtdiodenband gemäß der Vergußform nach FIG. 9,
- FIG. 10: für eine dritte Ausführungsform des Leuchtdiodenbands die Vergußform mit Nut im Schnitt,
- FIG. 11: den ersten Verfahrensschritt, nämlich das Gießen der transluzenten, seitlich abstrahlenden Schicht (zweite Vergußmasse), welche sich entsprechend dem Kapillareffekt in der Wandstärke verjüngt,
- FIG. 12: den zweiten Verfahrensschritt, nämlich das Gießen des ersten Schenkels des U-förmigen Gehäuses aus Kunststoffmaterial, welches verjüngend in die zweite Vergußmasse übergeht,
- FIG. 13: das u-förmige Gehäuse nach dem Entformen,
- FIG. 14: den dritten Verfahrensschritt, nämlich das Einkleben des LED-Moduls/Leitungsträgers mit Klebeband am Schenkel des Gehäuses,
- FIG. 15: den vierten Verfahrensschritt, nämlich das Gießen der ersten transparenten Vergußmasse bis zum inneren Rand der Basis und dem gegenüberliegenden Rand der zweiten Vergußmasse,
- FIG. 16: den fünften Verfahrensschritt, nämlich das Gießen des zweiten Schenkels des U-förmigen Gehäuses aus Kunststoffmaterial als Reflektionsfläche, zur dritten Ausführungsform des Leuchtdiodenband
- FIG. 17: eine vierte Ausführungsform einer Vergußform im Schnitt und
- FIG. 18: die vierte Ausführungsform des Leuchtdiodenbands nach FIG. 17,
- FIG. 19: eine fünfte Ausführungsform einer Vergußform im Schnitt und
- FIG. 20: die fünfte Ausführungsform des Leuchtdiodenbands nach FIG. 19,
- FIG. 21: im Detail eine Struktur an der Lichtaustrittsfläche (zweite Vergußmasse),
- FIG. 22: im Detail die Struktur in Form von Schrift,
- FIG. 23: im Detail die Struktur in Form von geometrischen Linien,
- FIG. 24: die Ausgestaltung der Form des Lichtaustritts (Deckel bzw. zweite Vergußmasse) in Dreiecksform und
- FIG. 25: das Leuchtdiodenband nach FIG. 24,
- FIG. 26: die Ausgestaltung der Form des Lichtaustritts (Deckel bzw. zweite Vergußmasse) als halbrunde 90° mit Hinterschnitt und
- FIG. 27: das Leuchtdiodenband nach FIG. 26,
- FIG. 28: die Ausgestaltung der Form des Lichtaustritts (Deckel bzw. zweite Vergußmasse) als rechteckige/quadratische 270° und
- FIG. 29: das Leuchtdiodenband nach FIG. 28,
- FIG. 30: die Ausgestaltung der Form des Lichtaustritts (Deckel bzw. zweite Vergußmasse) als Linse mit leichtem Hinterschnitt und
- FIG. 31: das Leuchtdiodenband nach FIG. 30,
- FIG. 32: die Ausgestaltung der Form des Lichtaustritts (Deckel bzw. zweite Vergußmasse) als rechteckige mit verbreiterter Abstrahlung und
- FIG. 33: das Leuchtdiodenband nach FIG. 32,
- FIG. 34: im Detail die Form für ein Leuchtdiodenband mit weißem Schenkel gerade auslaufend und transluzenten Schenkel mit Stufe,
- FIG. 35: im Detail die Form für ein Leuchtdiodenband mit weißem Schenkel gerade auslaufend und transluzenten Schenkel verjüngend,
- FIG. 36: im Detail die Form für ein Leuchtdiodenband mit weißem und transluzenten Schenkel mit Stufe,
- FIG. 37: im Detail die Form für ein Leuchtdiodenband mit weißem und transluzenten Schenkel gerade auslaufend,
- FIG. 38: im Detail die Form für ein Leuchtdiodenband mit weißem und transluzenten Schenkel mit Dreiecksform zum Ende hin,
- FIG. 39: im Detail die Form für ein Leuchtdiodenband mit weißem und transluzenten Schenkel mit rechteckigem Überstand,
- FIG. 40: im Detail die Form für ein Leuchtdiodenband mit angestelltem Boden, welcher das Licht reflektiert und mit einem Schenkel gerade und stumpf, und einem Schenkel verjüngend,
- FIG. 41: im Detail die Form für ein Leuchtdiodenband mit angestelltem Boden, welcher das Licht reflektiert und mit einem komplett als Reflektor ausgeformten Schenkel gerade und stumpf, und einem Schenkel verjüngend und
- FIG. 42: im Detail die Form für ein Leuchtdiodenband mit angestelltem Boden, welcher das Licht reflektiert und mit einem gerade und stumpfen Schenkel, und dem anderen Schenkel verjüngend.

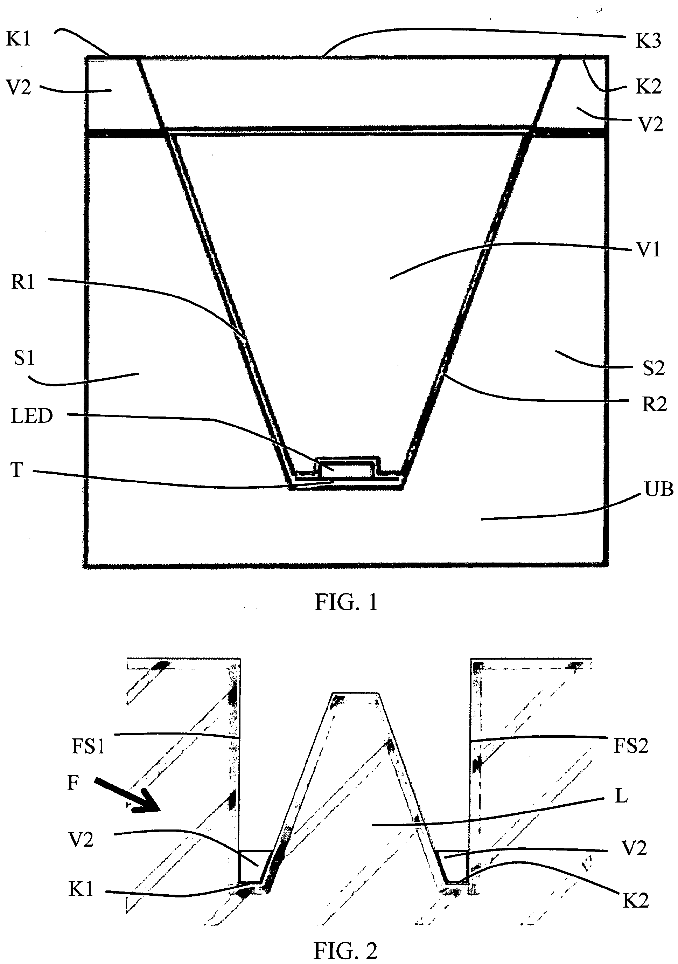

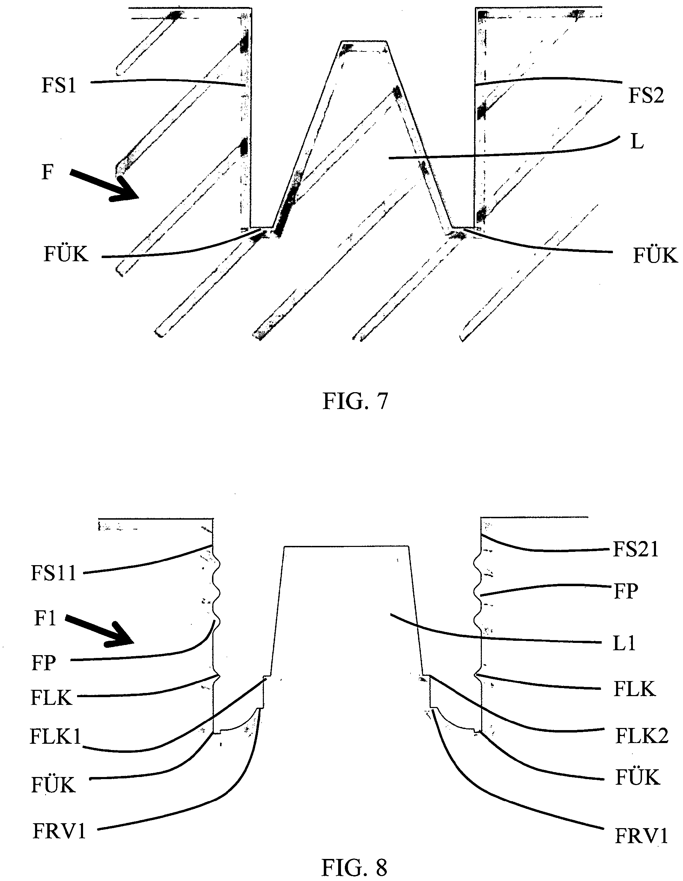

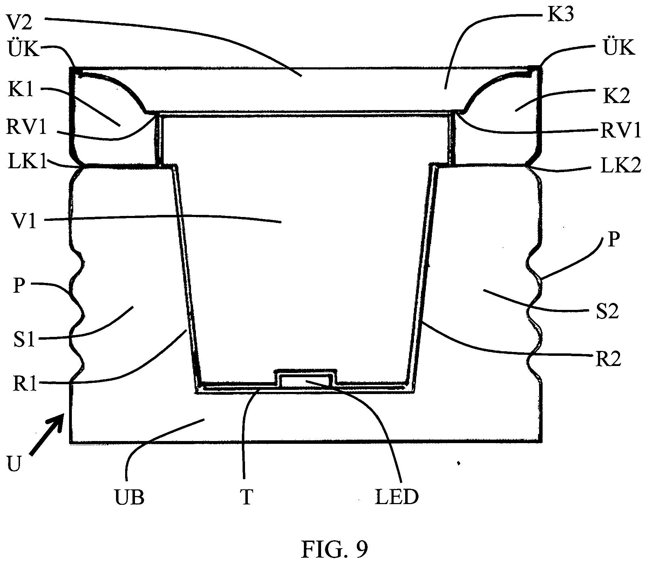

FIG. 1 zeigt eine erste Ausführungsform des Leuchtdiodenbands Fig. 7 die Vergußform im Schnitt und FIG. 2 bis FIG. 6 die einzelnen aufeinanderfolgenden Verfahrensschritte/Aufbau des erfindungsgemäßen Leuchtdiodenbands nach FIG. 1. FIG. 8 zeigt eine zweite Ausführungsform einer Vergußform im Schnitt zur Herstellung der in FIG. 9 dargestellten zweiten Ausführungsform des Leuchtdiodenbands gemäß der Erfindung.

FIG. 1 zeigt eine erste Ausführungsform des Leuchtdiodenband mit einem U-förmigen Gehäuse U, mit auf einem vertikal zur Erstreckungsrichtung flexiblen Leitungsträger T montierten Chip-Leuchtdioden LED und mit zwei in Abstrahlrichtung der Chip-Leuchtdioden LED übereinander und zwischen den beiden Schenkeln S1, S2 des Gehäuses U angeordneten Vergußmasse V1. Im Einzelnen weist das Leuchtdiodenband mindestens zwei an den Schenkeln S1, S2 angeordnete Reflektoren R1, R2 auf, welche das Licht der an der Basis UB eines u-förmigen Gehäuses U angeordneten Chip-Leuchtdioden LED reflektieren. Vorzugsweise bildet die zweite Vergußmasse V2, welche transluzent ist, an der Stirnseite der beiden Schenkeln S1, S2 eine dreiteilige Kappe K1, K2, K3 aus. Dabei bilden die zwei auf der Stirnseite der Schenkel S1, S2 angeordnete Kappenteile K1, K2 (mit stumpfen Ende dargestellt, jedoch ist im Rahmen der Erfindung jede Form/Profilierung der Lichtaustrittsfläche möglich) den Füllrand für das Einfüllen der ersten Vergußmasse V1, welche transparent ist, zwischen die Reflektoren R1, R2. Danach schließt die eingefüllte zweite Vergußmasse V2 als drittes Kappenteil K3 den Deckel.

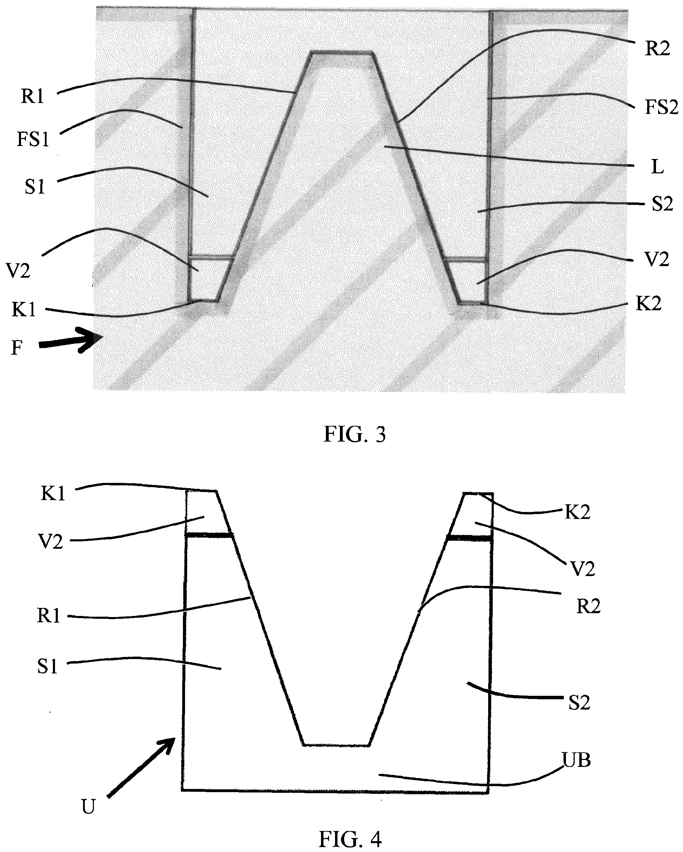

Wie FIG. 1 und beispielsweise FIG. 3 zeigen, sind Schenkel S1, S2 und Reflektoren R1, R2 einstückig, wobei die Reflektoren R1, R2 jeweils als Schrägfläche in offener V-förmiger Anordnung zueinander ausgestaltet sind.

In Fig. 7 ist die erfindungsgemäße Vergußform F im Schnitt dargestellt, welche nach einer Seite hin offen ist. Vorzugsweise ist der Konturenverlauf als sich von dieser Seite senkrecht erstreckende Schenkel FS1, FS2 und einer zur offenen Stirnseite sich erhebenden trapezförmigen Leiste L ausgestaltet.

Insbesondere ist das Kunststoffmaterial des Gehäuses U mit wärmeleitenden Füllstoffen, beispielsweise Keramik-Füllstoffen angereichert und dadurch wärmeleitend. In vorteilhafter Weise ist der Leitungsträger T wärmeleitend und mit Klebeband an der Basis UB des Gehäuses U angeklebt. Ein wärmeleitendes Klebeband übernimmt hier eine Doppelfunktion, nämlich Positionierung des Leitungsträgers T vor dem Vergießen und Verbesserung der Wärmeableiteigenschaften, so dass Wärmestaus vermieden sind. Gleiches gilt für den Leitungsträger T, nämlich Positionierung der LED's und Wärmeleitung einschließlich Vergrößerung der Oberfläche (Wärmestrahlung). Die Ausbreitung von Wärme erfolgt nämlich durch Wärmestrahlung, Wärmeleitung und Wärmeströmung (Konvektion). Wärmestrahlung ermöglicht auch die Abgabe von Wärme in das Vakuum, sie ist nur von der Temperatur des strahlenden Körpers abhängig und unabhängig von der Temperatur der Umgebung. Die Wärmestrahlung hängt von der Temperatur des Strahlers/Körpers und auch von der Beschaffenheit seiner Oberfläche ab. Wärmestrahlung erfolgt im Gegensatz zur Wärmeleitung auch dann, wenn der Körper die gleiche Temperatur wie seine Umgebung hat. Wie viel ein Körper abstrahlt, ist unabhängig von der Temperatur seiner Umgebung und der Körper erhält immer Strahlung von seiner Umgebung, selbst wenn diese kälter ist. Allerdings strahlt dann die Umgebung dem Körper weniger zu als umgekehrt und der Körper kühlt sich ab. Die Wärmeleitung erfolgt nur in der Materie, d.h. im Körper, und setzt in ihm ein Temperaturgefälle voraus. Wenn man einem Körper nicht an einer Stelle dauernd Wärme zuführt oder entnimmt, so gleichen sich alle Temperaturunterschiede in ihm mit der Zeit aus, und zwar durch einen Wärmestrom, der von höherer zu tieferer Temperatur fließt. Metalle sind relativ gute Wärmeleiter, beispielsweise Kupfer mit einer Wärmeleitfähigkeit von 0,93 cal/cm · s · k im Temperaturbereich zwischen 0° C und 100° C oder Aluminium mit einer Wärmeleitfähigkeit von 0,55 cal/cm · s · k im Temperaturbereich zwischen 0° C und 200° C, während Kunststoffe in der Regel schlechtere Wärmeleiter sind. Der Wärmeübergang von einem Körper einer bestimmten Temperatur zu seiner Umgebung wird durch den Wärmeübergangswert beschrieben und der Wärmedurchgang durch einen Körper, beispielsweise eine Platte, beschreibt man durch den Wärmedurchgangswert. Der Wärmeübergangswert hängt, wie bereits vorstehend beschrieben, stark von der Oberflächenbeschaffenheit ab und der Wärmedurchgangswert von der Plattendicke. Das u-förmige Gehäuse U mit angeformten Reflektoren R1 und R2 gemäß der Erfindung weist den Vorteil auf, dass auf überraschend einfache und kostengünstige Art und Weise das Verhältnis von Wärmeübergangswert zu Wärmedurchgangswert (durch Umspritzen des flexiblen Leitungsträgers T und der montierten Chip-Leuchtdioden LED mit der ersten transparenten Vergußmasse V1 und Wärmekapazität aus Kunststoffgehäuse U und der beiden Vergußmassen V1, V2) derart optimiert wurde, dass eine besonders effektive Wärmeabfuhr gewährleistet ist. Weiterhin weist die erste Ausführungsform des Leuchtdiodenbands den Vorteil auf, dass - obwohl dieses vertikal in Erstreckungsrichtung biegeelastisch ist - dennoch ein guter dauerhafter Schutz der im Gehäuse befindlichen Bauelemente vor äußeren Einflüssen bewirkt wird.
Das Verfahren zur Herstellung des Leuchtdiodenbands gemäß der ersten Ausführungsform mittels eines CNC gestützten, in X + Y-Achsen verfahrbaren Dosierkopfs umfasst folgende Arbeitsschritte:
a) Einfüllen (unter genauer Vorgabe des Volumens pro Meter in die Form F maschinell linear, wobei die Füllhöhe ab Basis FÜK = Überlaufkante ÜK/Stirnseite der zweiten Vergußmasse V2 klar definiert und in beiden Teilabschnitten der Vergußform F identisch ist) der zweiten Vergußmasse V2, welche flüssig und transluzent ist, zwischen den Schenkeln FS1, FS2 und der Schrägfläche der Leiste L der Vergußform F und Aushärten in der Vergußform F,
b) Einfüllen (unter genauer Vorgabe des Volumens pro Meter in die Form F maschinell linear, bis die Oberfläche gerade mit den Formenoberkanten rechts und links bündig abschließt) des Kunststoffmaterials des Gehäuses U bis zum Füllrand der Vergußform F derart, dass die beiden Schenkel S1, S2 mit angeformten Reflektoren R1, R2 und die Basis UB des U-förmigen Gehäuses U ausgestaltet werden (es verbleiben beide Schichten (Kunststoffmaterial und zweite Vergußmasse V2) in der Form F bis diese soweit ausgehärtet sind und entformt werden können; damit ist der Mantel zur Aufnahme des LED Moduls (beispielsweise flexible Leiterplatte, biegsam) fertiggestellt),
c) Ankleben (insbesondere mittels eines beidseitigem, vorzugsweise wärmeleitenden Klebebands) der flexiblen Leiterplatte (Leitungsträger T mit den montierten Chip-Leuchtdioden LED) im U-förmigen Gehäuse U auf der Basis UB (insbesondere wegen Reflexion weißes Polyurethan PU des Mantels),
d) Einfüllen (unter genauer Vorgabe des Volumens pro Meter in die Form F maschinell linear, bis die Oberfläche gerade den Übergang vom weißen des Mantels zum transluzenten PU/ der zweiten Vergußmasse V2 erreicht) der ersten Vergußmasse V1, welche transparent ist, zwischen die Reflektoren R1, R2 und
e) Einfüllen der zweiten Vergußmasse V2 zwischen die zwei auf der Stirnseite der Schenkel S1, S2 angeordneten Kappenteile K1, K2, wodurch diese als drittes Kappenteil K3 den Deckel schließt.

In FIG. 8 ist eine zweite Ausführungsform einer Vergußform F1 im Schnitt dargestellt, welche ebenfalls wie die Vergußform F nach Fig. 7 nach einer Seite hin offen ist und einen baukastenartigen Aufbau des erfindungsgemäßen Leuchtdiodenbands ermöglicht. Der Konturenverlauf mit als sich von dieser Seite senkrecht erstreckenden Schenkeln FS11, FS21 und einer zur offenen Stirnseite sich erhebenden, annähernd trapezförmigen Leiste L1 wurde beibehalten. Zur Ausgestaltung einer gekrümmten, insbesondere einer halbrunden Ausformung (siehe FIG. 9) der Kappenteile K1, K2 zwischen Überlaufkante ÜK und Kante RV1 weist korrespondierend hierzu die Vergußform F1 die entsprechenden Kanten FÜK und FRV1 auf. Weiterhin weisen die Schenkel FS11, FS21 der Vergußform F1 eine Profilierung FP auf, welche kongruent zur Profilierung P der zweiten Ausführungsform des Leuchtdiodenbands (siehe FIG. 9) ist. Diese Profilierung P dient einerseits zur Positionierung von Halteklammern des Leuchtdiodenbands, andererseits wird durch die Vergrößerung der Oberfläche die Wärmeabführung verbessert.

Das Verfahren zur Herstellung der in FIG. 9 dargestellten zweiten Ausführungs-form des Leuchtdiodenbands gemäß der Erfindung ist zusammenfassend nachfolgend beschrieben:
1) Einfüllen des transluzenten Materials/zweite Vergußmasse V2 in die Form F1 ab Basis FÜK = Überlaufkante ÜK bis zu den Kanten FLK, FLK1, FLK2. Die Kanten FLK, FLK1, FLK2 dienen dazu im fertigen Produkt eine saubere, seitliche Leuchtkante LK1, LK2 zu erzielen.
2) Auffüllen bis zum Füllrand der Vergußform F1 mit weißen, vorzugsweise wärmeleitenden PU, so dass der Grundkörper in U-Form (vorzugsweise mit Schrägfläche als Reflektoren R1, R2 und korrespondierend zur trapezförmigen Leiste L1 der Vergußform F1), d.h. das Gehäuse U entsteht; Aushärten lassen und entformen.
3) LED Träger (d.h. Leitungsträger T mit den montierten Chip-Leuchtdioden LED) mit vorzugsweise wärmeleitendem Klebeband einkleben.
4) Mit transparentem PU/erste Vergußmasse V1 bis zur definierten Kante RV1 am transluzenten Material/zweite Vergußmasse V2 auffüllen.
5) Kappe K3 mit transluzenten Material/zweite Vergußmasse V2 schließen (dreiteilig mit den Kappenteilen K1, K2 und K3). Durch die gekrümmte (halbrund, konkav oder konvex) oder geradlinige (zwischen Überlaufkante ÜK und Kante RV1) Ausformung der Kappenteile K1 und K2 wird die zuerst gegossene, von oben sichtbare, Fläche des Materials/zweite Vergußmasse V2 minimiert, wodurch ein gleichmäßigeres Lichtbild im Vergleich zur ersten Ausführungsform des Leuchtdiodenbands erzielbar ist.

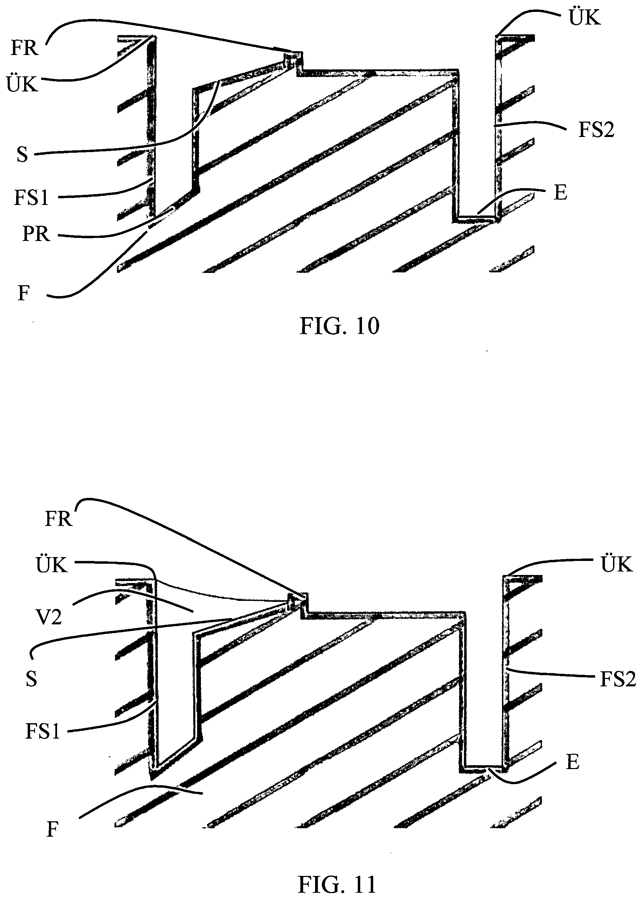

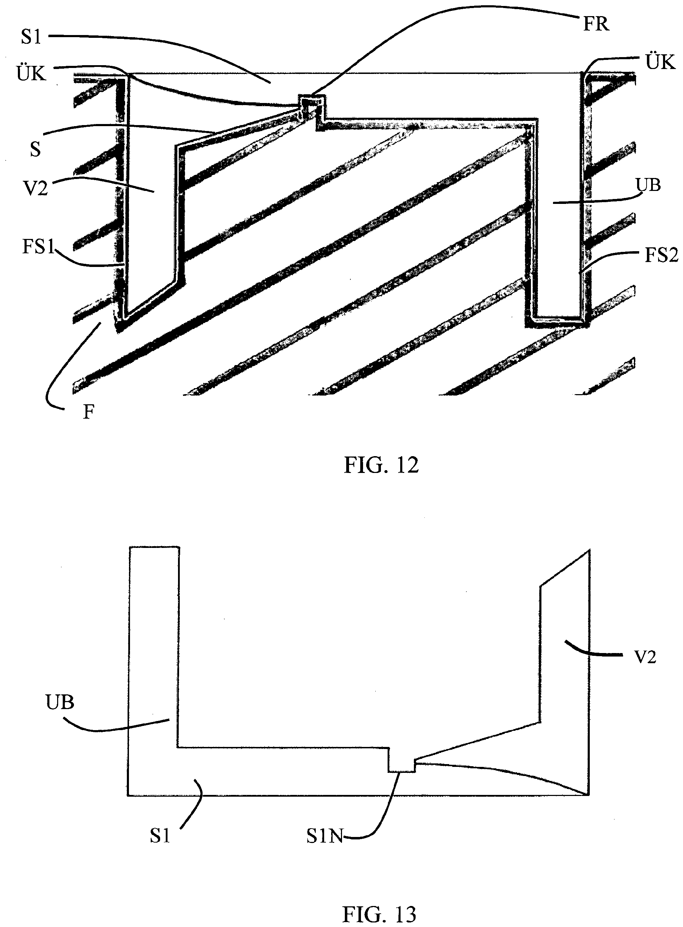

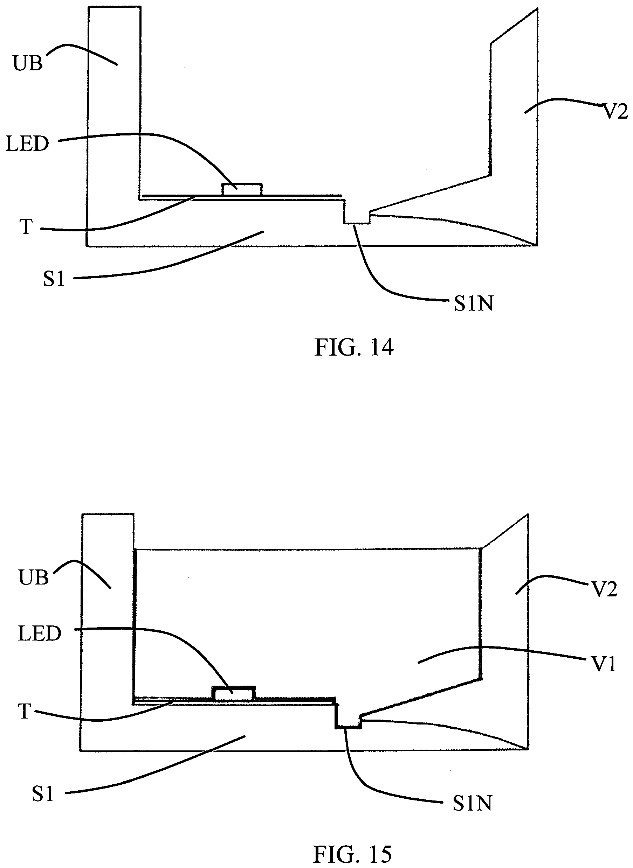

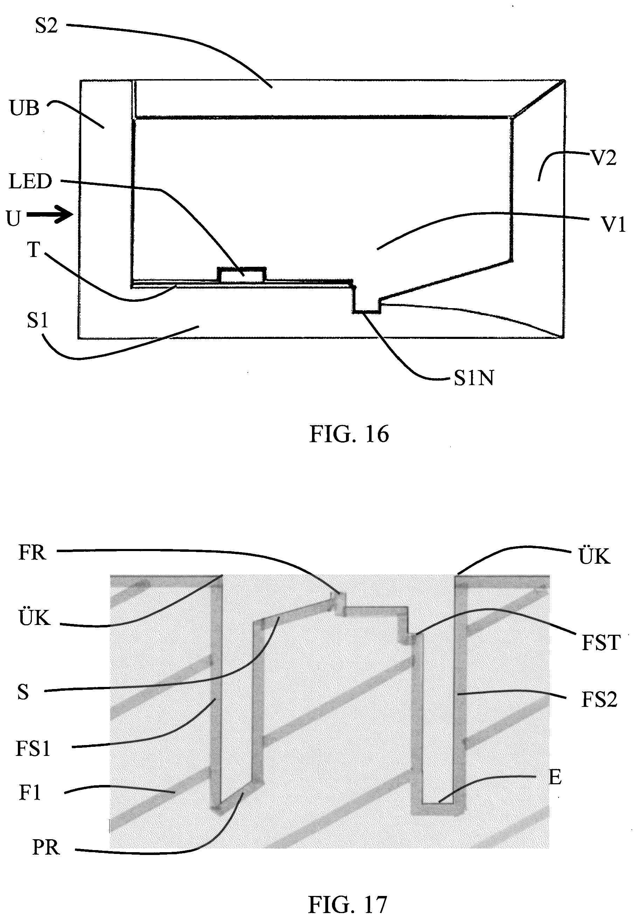

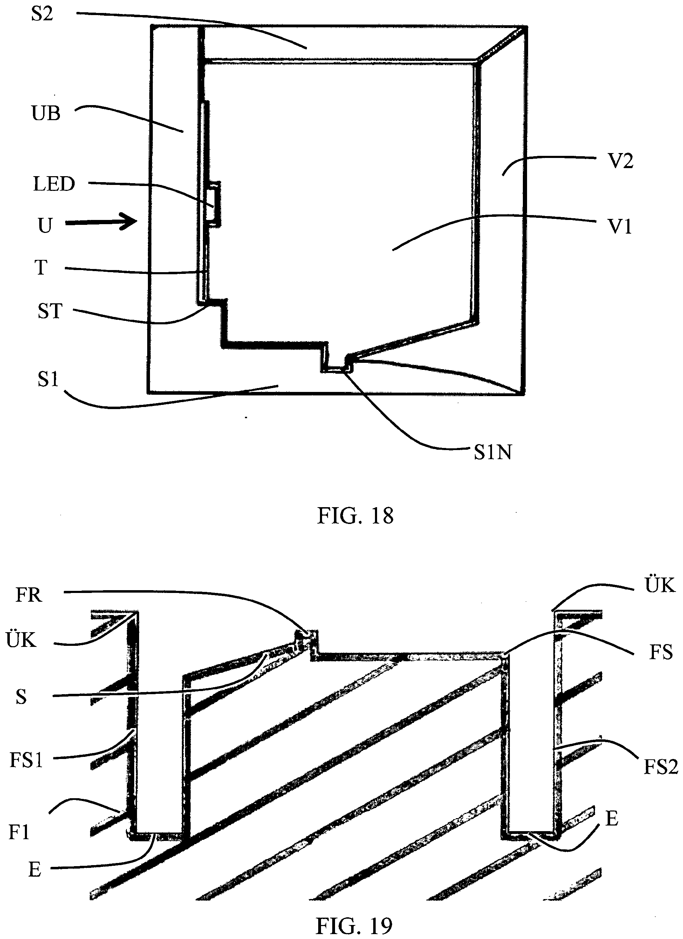

FIG. 10 zeigt eine weitere Ausgestaltung der Vergußform F im Schnitt, FIG. 11 bis FIG. 16 die einzelnen aufeinanderfolgenden Verfahrensschritte zum Aufbau eines erfindungsgemäßen Leuchtdiodenbands. FIG. 17 zeigt eine weitere Ausführungsform einer Vergußform im Schnitt zur Herstellung der in FIG. 18 dargestellten weiteren Ausführungsformen des Leuchtdiodenbands gemäß der Erfindung.
Die in FIG. 10 dargestellte Vergußform F ist als eine nach einer Seite hin offene Vergußform F, deren Konturenverlauf als sich von dieser Seite senkrecht erstreckende Schenkel FS1, FS2 und einem zur offenen Stirnseite zwischen den Schenkel FS1, FS2 sich erhebenden Füllrand FR aufweist, ausgestaltet. Weiterhin weist die Vergußform F zwei sich gegenüberliegende Überlaufkanten ÜK und eine Schrägfläche S auf, an welcher eine zweite Vergußmasse V2 unter genauer Vorgabe des Volumens pro Meter maschinell linear in die Form F eingefüllt wird.

FIG. 16 zeigt die weitere Ausführungsform des Leuchtdiodenband mit einem U-förmigen Gehäuse U, mit auf einem vertikal zur Erstreckungsrichtung flexiblen Leitungsträger T montierten Chip-Leuchtdioden LED und mit zwei in Abstrahlrichtung der Chip-Leuchtdioden LED übereinander und zwischen den beiden Schenkeln S1, S2 des Gehäuses U angeordneten Vergußmassen V1, V2. Im Einzelnen besteht mindestens der erste Schenkel S1 des U-förmigen Gehäuses U aus transluzenter, entsprechend dem Kapillareffekt in der Wandstärke sich verjüngender und in das Kunststoffmaterial des Gehäuses U übergehenden zweiten Vergußmasse V2, wobei an diesem Schenkel S1 der flexible Leitungsträger T angeordnet und in der ersten transparenten Vergußmasse V1 eingebettet ist. Das Licht der Chip-Leuchtdioden LED wird von den Innenflächen des Gehäuses U reflektiert und durch die zweite Vergußmasse V2 an der Stirnseite diffus abgestrahlt. Das Leuchtdiodenband ist horizontal in Erstreckungsrichtung biegeelastisch.
Insbesondere weist der erste Schenkel S1, wie in FIG. 16 dargestellt ist, eine an das Ende der zweiten Vergußmasse V2 angrenzende Nut S1N auf. Im Bereich treffen drei verschiedene Materialien, nämlich des Schenkels S1 und der beiden Vergußmasse V1, V2 aufeinander, wobei durch die Ausgestaltung der Nut S1N eine dauerhafte Biegeelastizität in diesem Bereich erfüllt werden kann.
Vorzugsweise ist das Kunststoffmaterial des Gehäuses U nach FIG. 16 mit Keramik-Füllstoffen angereichert und dadurch wärmeleitend. In vorteilhafter Weise ist der Leitungsträger T wärmeleitend und mit Klebeband, insbesondere einem wärmeleitenden Klebeband am Schenkel S1 des Gehäuses U angeklebt. Das Klebeband übernimmt hier dann eine Doppelfunktion, nämlich Positionierung des LED-Moduls/Leitungsträgers T vor dem Vergießen und Verbesserung der Wärmeableiteigenschaften, so dass Wärmestaus vermieden sind. Gleiches gilt für den Leitungsträger T, nämlich Positionierung der LED's und Wärmeleitung einschließlich Vergrößerung der Oberfläche (Wärmestrahlung). Das u-förmige Gehäuse U nach FIG. 16 mit am Schenkel S1 angeordneten LED-Modul/ Leitungsträger T gemäß der Erfindung weist den Vorteil auf, dass auf überraschend einfache und kostengünstige Art und Weise das Verhältnis von Wärmeübergangswert zu Wärmedurchgangswert (durch Umspritzen des flexiblen LED-Modul/Leitungsträgers T und der montierten Chip-Leuchtdioden LED mit der ersten transparenten Vergußmasse V1 und Wärmekapazität aus Kunststoffgehäuse U und der beiden Vergußmassen V1, V2) derart optimiert wurde, dass eine besonders effektive Wärmeabfuhr gewährleistet ist. Weiterhin weist das Leuchtdiodenband nach FIG. 16 den Vorteil auf, dass - obwohl dieses horizontal in Erstreckungsrichtung biegeelastisch ist - dennoch ein guter dauerhafter Schutz der im Gehäuse befindlichen Bauelemente vor äußeren Einflüssen bewirkt wird.

Das Verfahren zur Herstellung des Leuchtdiodenbands nach FIG. 16 mittels eines CNC gestützten, in X + Y-Achsen verfahrbaren Dosierkopfs umfasst folgende Arbeitsschritte:
a) Einfüllen (unter genauer Vorgabe des Volumens pro Meter in die Form F; maschinell linear) der zweiten Vergußmasse V2, welche flüssig und transluzent ist, und Aushärten in der Vergußform F (wobei durch die niedrige Oberflächenspannung eines flüssigen, transluzenten Polyurethan PUs/Vergußmasse V2 sich die Außenkante bündig bis an das Ende der Form F nach oben zieht, sodass ein gleichmäßiger Abschluss an der Oberkante der Form F mit dem transluzenten PU/ Vergußmasse V2 entsteht),
b) Einfüllen (unter genauer Vorgabe des Volumens pro Meter in die Form F; maschinell linear, bis zur Überlaufkante ÜK der Vergußform F) des Kunststoffmaterial des Gehäuses U und dabei Ausbilden des ersten Schenkels S1 und der Basis UB des U-förmigen Gehäuses U (es verbleiben beide Schichten (Kunststoffmaterial und zweite Vergußmasse V2, in der Form F bis diese soweit ausgehärtet sind und entformt werden können; damit ist der Mantel (weißes Polyurethan PU) zur Aufnahme des LED Moduls (beispielsweise flexible Leiterplatte, biegsam) fertiggestellt),
c) Positionieren unterhalb einer an das Ende der zweiten Vergußmasse V2 angrenzende Nut S1N des ersten Schenkels S1 des Gehäuses U und Ankleben (insbesondere mittels eines beidseitigem, wärmeleitenden Klebebands) der flexiblen Leiterplatte (Leitungsträger T mit den montierten Chip-Leuchtdioden LED),
d) Einfüllen (unter genauer Vorgabe des Volumens pro Meter in das u-förmige Gehäuse entformt aus Form F; maschinell linear) der ersten Vergußmasse V1, welche transparent ist, bis zum inneren Rand der Basis UB und dem gegenüberliegenden Rand der zweiten Vergußmasse V2 (Beginn der Verjüngung der Schenkel S1 und S2) und
e) Einfüllen des Kunststoffmaterials (unter genauer Vorgabe des Volumens pro Meter in das u-förmige Gehäuse entformt aus Form F; maschinell linear) bis zum äußeren Rand der Basis UB und dem gegenüberliegenden Rand der zweiten Vergußmasse V2 zur Ausgestaltung des zweiten Schenkel S2 des U-förmigen Gehäuses U.

In FIG. 17 ist eine weitere Ausführungsform einer Vergußform F1 im Schnitt dargestellt, welche ebenfalls wie die Vergußform F nach FIG. 10 nach einer Seite hin offen ist. Der Konturenverlauf mit als sich von dieser Seite senkrecht erstreckende Schenkel FS1, FS2, einem zur offenen Stirnseite zwischen den Schenkel FS1, FS2 sich erhebenden Füllrand FR, zwei sich gegenüberliegende Überlaufkanten ÜK und eine Schrägfläche S wurde beibehalten. Im Vergleich zur Vergußform F nach FIG. 10 weist die Vergußform F1 an einem Schenkel, in FIG.17 der Schenkel FS2 eine Stufe FST und in FIG.18 der Schenkel S1 eine Stufe ST auf, welche als Anschlag für den flexiblen Leitungsträger T (Positionierung) dient.
Demgemäß wurde der prinzipielle Formenbau des U-förmigen Kunststoffgehäuses U beibehalten und es wird sich ebenfalls der Kapillareffekt bei der transluzenten Schicht/zweiten Vergußmasse V2 zu Nutze gemacht. Auch hier verjüngt sich die transluzente Schicht/zweiten Vergußmasse V2 im Schenkel S1. Abweichend dazu wird das LED Modul (LED Band)/ flexible Leitungsträger T um 90° versetzt an der Basis UB und genau positioniert durch die Stufe ST eingebracht, also genau gegenüber der transluzenten Schicht/zweiten Vergußmasse V2. Darauf folgen die vorstehend beschriebenen Produktionsschritte, nämlich mit transparentem Material/erste Vergußmasse V1 auffüllen und mit weißem Material das U-förmige Gehäuse U schließen (Schenkel S2).

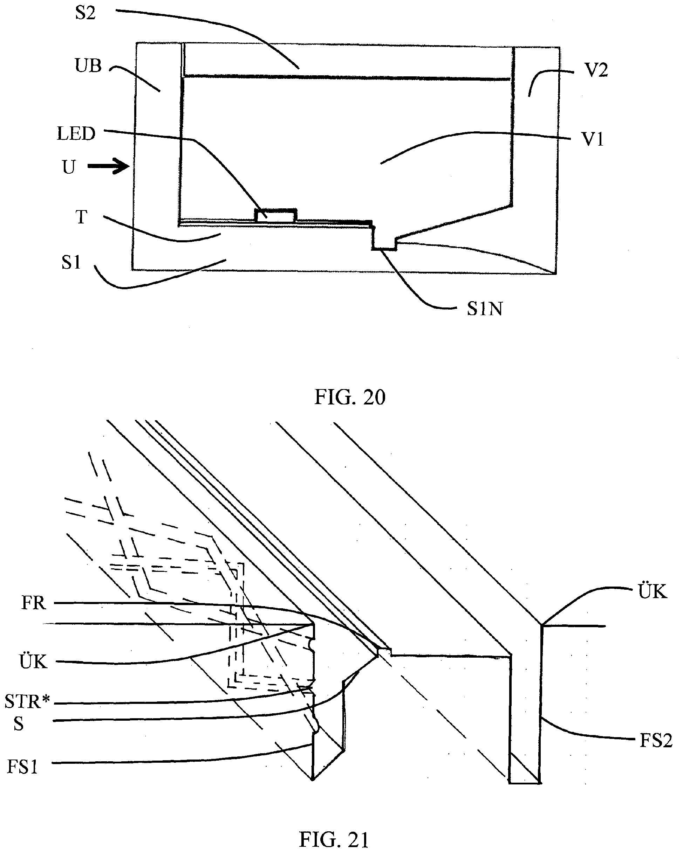

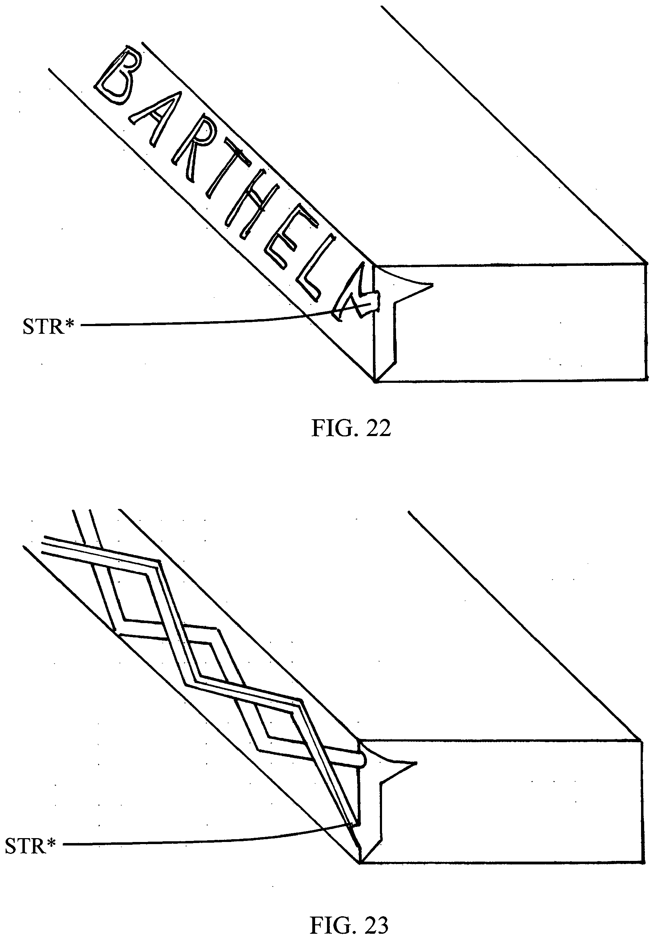

FIG. 19 zeigt eine weitere Ausführungsform einer Vergußform im Schnitt und FIG. 20 die Ausführungsform des Leuchtdiodenbands nach FIG. 19. Im Vergleich zur vorstehend beschriebenen Ausführungsform weisen beide Schenkel S1 und S2 stumpfe Enden auf.
Weiterhin zeigt FIG. 21 im Detail eine Struktur an der Lichtaustrittsfläche, d.h. einen Formenaufbau mit eingebrachten Konturen in der transluzenten, lichtemittierenden Schicht, so dass auf überraschend einfache Art und Weise eine beliebige Oberflächenänderungen der transluzenten, lichtemittierenden Schicht/ zweiten Vergußmasse V2 ermöglicht wird. Mögliche 3-dimensionale Ausformungen STR* sind Schriften (siehe FIG. 22) wie Firmenlogos (Schrift in transluzenter Schicht), 3-Dimensionale Konturen wie Prismenoptik o.ä. Die Ausformung (in Form von geometrischen Linien, siehe FIG. 23) der transluzenten Schicht kann aufbauend (erhaben sein) oder abtragend (Mulde) sein, d.h. beispielsweise prismenförmige oder halbrunde Konturen in transluzenter Schicht/zweiter Vergußmasse V2.

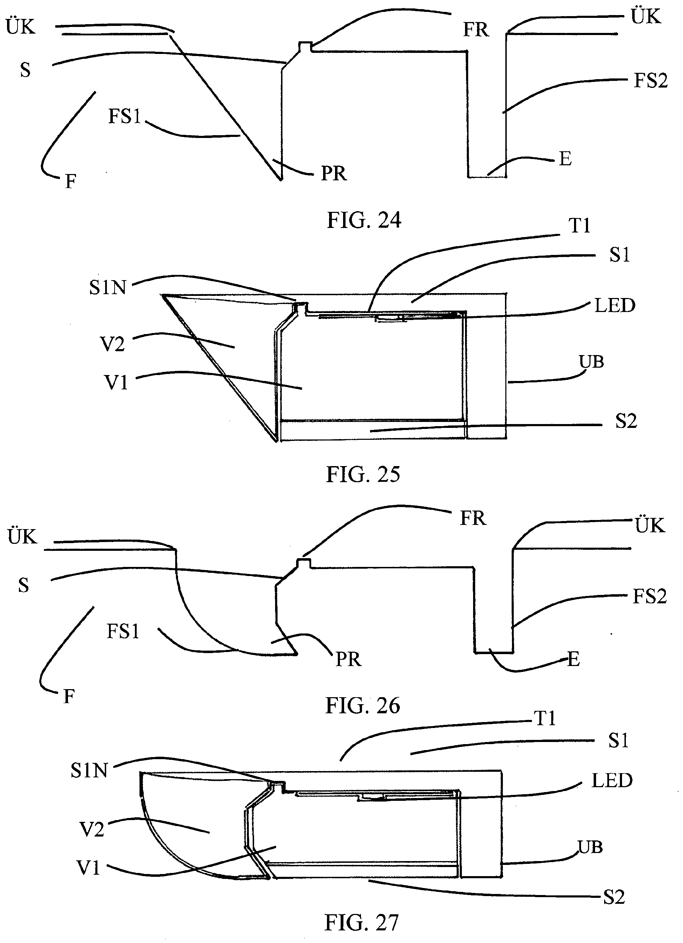

FIG. 24 zeigt die Ausgestaltung der Form des Lichtaustritts (Deckel bzw. zweite Vergußmasse V2) in Dreiecksform. Der transluzente Teil wird so verändert, dass eine Abstrahlung nach oben und zur Seite möglich ist (siehe Leuchtdiodenband nach FIG. 25). Denkbar wäre auch eine Rücken-an-Rücken Montage, um eine breitere Abstrahlung zu realisieren.

Weiterhin zeigt FIG. 26 die Ausgestaltung der Form des Lichtaustritts (Deckel bzw. zweite Vergußmasse V2) als halbrunde 90° mit Hinterschnitt. Änderung hierbei ist der vergrößerte transluzente Teil, der eine Abstrahlung nach oben und zu einer Seite hin ermöglicht (siehe Leuchtdiodenband nach FIG. 27). Durch die spezielle Ausformung des transluzenten Elementes (Hinterschnitt) wird eine gleichmäßigere Ausleuchtung des transluzenten Elements erreicht.

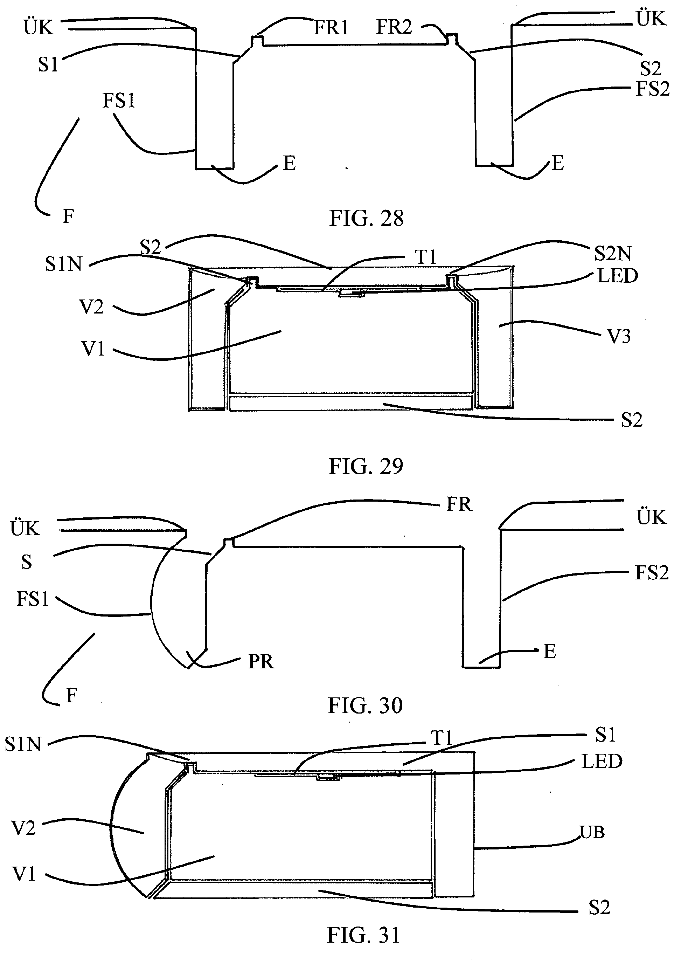

Weiterhin zeigt FIG. 28 die Ausgestaltung der Form des Lichtaustritts (Deckel bzw. zweite Vergußmasse V2) als rechteckige/quadratische 270°. Bei dieser Ausführung (siehe Leuchtdiodenband nach FIG. 29) sind beide Schenkel transluzent ausgeführt. Dadurch wird eine 3-seitige Abstrahlung erreicht, wobei oben unten biegen möglich jedoch links und rechts nicht möglich ist.

Weiterhin zeigt FIG. 30 die Ausgestaltung der Form des Lichtaustritts (Deckel bzw. zweite Vergußmasse V2) als Linse mit leichtem Hinterschnitt. Der transluzente Schenkel wird jedoch als Linse (mit leichtem Hinterschnitt) ausgeführt (siehe Leuchtdiodenband nach FIG. 31). Wichtig ist die definierte Füllkante am Ende der Linse, so klein wie möglich so groß wie nötig. Diese erlaubt einen sauberen Abschluss der transluzenten Linse.

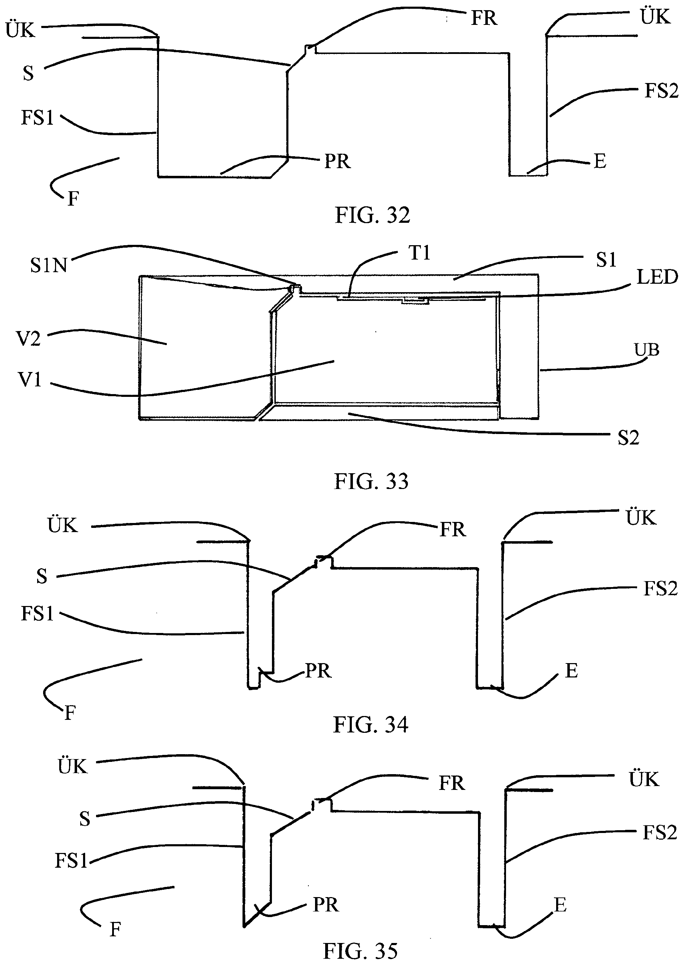

Weiterhin zeigt FIG. 32 die Ausgestaltung der Form des Lichtaustritts (Deckel bzw. zweite Vergußmasse V2) als rechteckige mit verbreiterter Abstrahlung. Durch die Verbreiterung des transluzenten Schenkels (siehe Leuchtdiodenband nach FIG. 33)wird eine verbreiterte Abstrahlung erzielt werden, jedoch ohne die klare rechteckige Außenkontur zu verändern.

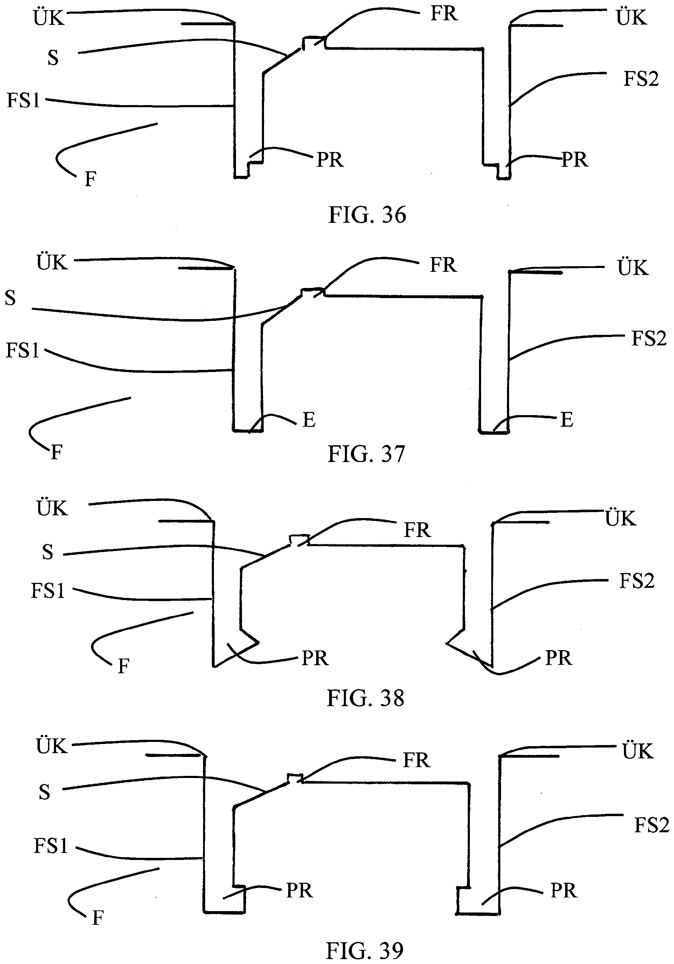

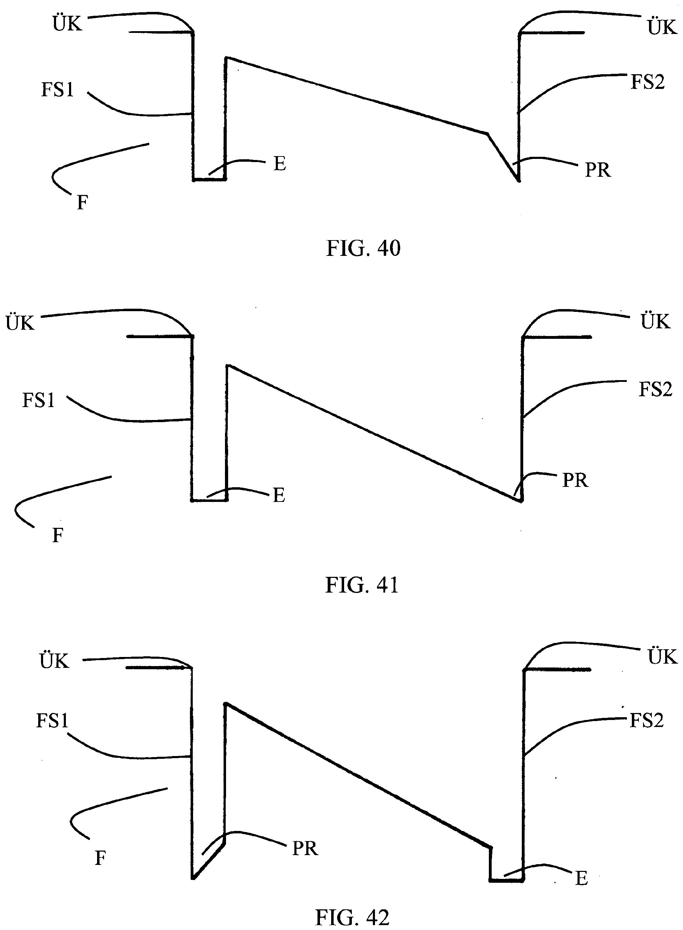

FIG. 34 bis FIG. 42 zeigen alternative Ausformungen der U-Gehäuseschenkel S1, S2, wobei die Stirnseiten der beiden Schenkel FS1, FS2 der Vergußform F entweder ein stumpfes Ende E oder eine Profilierung PR oder jeweils beides E, PR aufweisen. Dabei zeigt FIG. 34 im Detail die Form für ein Leuchtdiodenband mit weißem Schenkel gerade auslaufend und transluzenten Schenkel mit Stufe, FIG. 35 im Detail die Form für ein Leuchtdiodenband mit weißem Schenkel gerade auslaufend und transluzenten Schenkel verjüngend, FIG. 36 im Detail die Form für ein Leuchtdiodenband mit weißem und transluzenten Schenkel mit Stufe, FIG. 37 im Detail die Form für ein Leuchtdiodenband mit weißem und transluzenten Schenkel gerade auslaufend, FIG. 38 im Detail die Form für ein Leuchtdiodenband mit weißem und transluzenten Schenkel mit Dreiecksform zum Ende hin, FIG. 39 im Detail die Form für ein Leuchtdiodenband mit weißem und transluzenten Schenkel mit rechteckigem Überstand. FIG. 40 bis 42 zeigen die Form für ein Leuchtdiodenband, bei dem der LED Streifen an dem senkrechten Schenkel aufgebracht wird, dieser den angestellten Boden an strahlt, welcher das Licht reflektiert und nach oben leitetet, wo eine transluzente Schicht für ein gleichmäßiges Lichtbild sorgt. Im Detail zeigt FIG. 40 die Form für ein Leuchtdiodenband mit einem Schenkel gerade und stumpf, und einem Schenkel verjüngend, FIG. 41 mit einem komplett als Reflektor ausgeformten Schenkel gerade und stumpf, und einem Schenkel verjüngend und FIG. 42 mit einem geraden und stumpfen Schenkel, und den anderen Schenkel verjüngend.

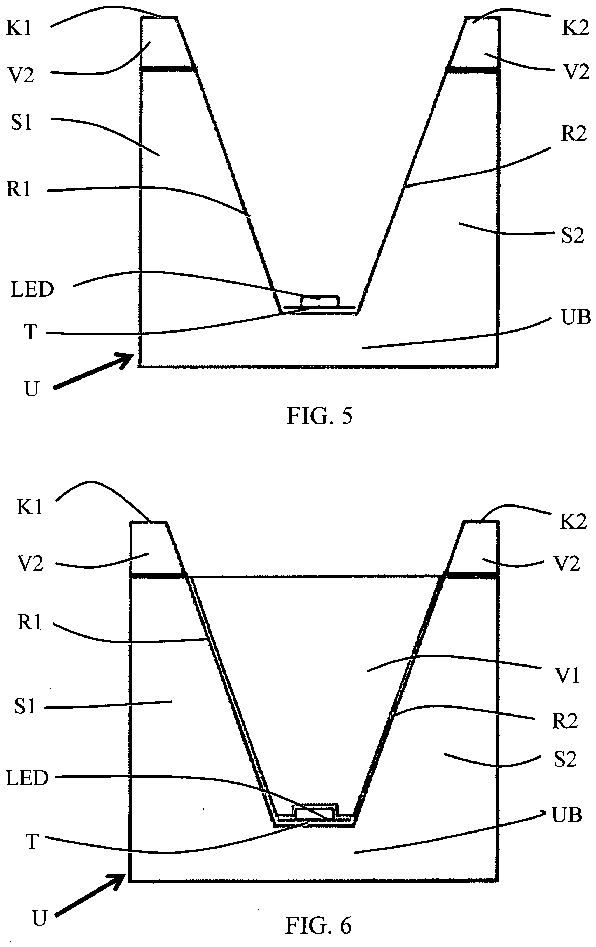

Zusammenfassend weisen die erfindungsgemäßen baukastenartig zusammenstellbaren Leuchtdiodenbänder folgende Vorteile auf:
- Zulässiges oben/unten Biegen des Leuchtdiodenbands (vertikal in Erstreckungsrichtung, FIG. 6) oder zulässiges Biegen des Leuchtdiodenbands horizontal (FIG. 16) oder vertikal (FIG. 18) in Erstreckungsrichtung.
- Gemäß dem inneren Aufbau bleibt das von der LED's emittierte Licht sozusagen im weißen reflektierendem "U" gefangen und kann nur durch die transluzent aufgebrachte Schicht/zweite Vergußmasse V2 um 90° versetzt zum LED-Streifen T oder überwiegend direkt (LED Modul/LED Band/ flexibler Leitungsträger T an der Basis UB angeordnet) diffus abgestrahlt werden.
- Der große Abstrahlwinkel von 180° (FIG. 16, FIG. 18) und der in sich homogene Lichtaustritt.
- Durch die erfindungsgemäße Maßnahme, die transluzente Schicht V2 bzw. die transluzente, seitlich abstrahlende Schicht V2 als erstes zu gießen (FIG. 6, FIG. 16 und

FIG. 18), kann im letzten Fertigungsschritt beim Einfüllen auf verjüngende Kanten verzichtet werden.
- Das weiße verwendete PU-Material des u-förmigen Gehäuses U ist mit Füllstoffen, vorzugsweise Keramik-Füllstoffen angereichert und dadurch wärmeleitend; in Kombination mit dem vorzugsweise wärmeleitenden Klebeband, mit welchem das LED Modul /Leitungsträger T mit den montierten Chip-Leuchtdioden LED eingeklebt ist, wird die Wärme optimal abgeführt und optimale Lebensdauervoraussetzungen sind somit gegeben.
- Der innere Aufbau kann als Reflektor konzipiert (FIG. 6, FIG. 16 und FIG. 18) werden und maximiert dadurch den Lichtausstoß.
- Der große Abstrahlwinkel von über 180° bis nahezu 270° und in sich homogener Lichtaustritt (FIG. 6).

Die Erfindung ist nicht auf die dargestellten und beschriebenen Ausführungsbeispiele beschränkt, sondern umfasst auch alle im Sinne der Erfindung gleichwirkende Ausführungen. Im Rahmen der Erfindung kann auch nur ein Reflektor vorgesehen werden (in der Zeichnung nicht dargestellt, d.h. ein Schenkel mit angeordnetem Reflektor und ein Schenkel ohne Reflektor sowie hierzu komplementäre Vergußform), welcher auf der gegenüberliegenden Seite des Schenkels, welcher den Leitungsträger T trägt, angeordnet ist, wobei der Leitungsträger T wärmeleitend ist und der Schenkel gesamt zur Wärmeableitung dient; über den Leitungsträger T kann eine dritte Schicht, insbesondere eine Gelschicht, eingebracht werden, wodurch kleine Biegeradien ermöglicht werden.

Entsprechend kann im Rahmen der Erfindung auch ein Reflektor vorgesehen werden (in der Zeichnung nicht dargestellt, d.h. an der Basis UB oder am Schenkel S2 wird ein Reflektor angeordnet), wobei der Leitungsträger T wärmeleitend ist und Basis UB/Schenkel S1/Schenkel S2 gesamt zur Wärmeableitung dient.

Weiterhin kann im Rahmen der Erfindung der Konturenverlauf der Mantelflächen der baukastenartig aus Teilen (Gehäuse und Deckel bzw. Lichtaustritt einschließlich Lichtaustritt durch die Gehäuseteile, nämlich Schenkel und Basis) zusammenstellbaren Leuchtdiodenbänder beliebig gestaltet werden.

## Patentansprüche

1. Leuchtdiodenband mit einem U-förmigen Gehäuse (U), mit zwei Schenkeln (S1, S2) und einer Basis (UB), mit auf einem flexiblen Leitungsträger (T) montierten Chip-Leuchtdioden (LED) und mit zwei in Abstrahlrichtung der Chip-Leuchtdioden (LED) übereinander und zwischen den beiden Schenkeln (S1, S2) des Gehäuses (U) angeordneten Vergußmassen (V1, V2), die Chip-Leuchtdioden (LED) sind an der Basis (UB) angeordnet, **dadurch gekennzeichnet, dass** mindestens der erste Schenkel (S1) des U-förmigen Gehäuses (U) aus transluzenter, in der Wandstärke sich verjüngender und in ein Kunststoffmaterial des Gehäuses (U) übergehenden zweiten Vergußmasse (V2) besteht, dass der flexible Leitungsträger (T) in einer ersten transparenten Vergußmasse (V1) eingebettet ist und dass das Licht der Chip-Leuchtdioden (LED) von den Innenflächen des Gehäuses (U) reflektiert und durch die zweite Vergußmasse (V2) diffus abgestrahlt wird, wobei das Leuchtdiodenband in Erstreckungsrichtung biegeelastisch ist.

2. Leuchtdiodenband nach Anspruch 1, **dadurch gekennzeichnet, dass** das Kunststoffmaterial des Gehäuses (U) mit wärmeleitenden Füllstoffen angereichert und dadurch wärmeleitend ist.

3. Leuchtdiodenband nach Anspruch 1, **dadurch gekennzeichnet, dass** der Leitungsträger (T) mit Klebeband an der Basis (UB) des Gehäuses (U) oder am ersten Schenkel (S1) angeklebt ist.

4. Leuchtdiodenband nach Anspruch 1, **dadurch gekennzeichnet, dass** der Leitungsträger (T) wärmeleitend ist.

5. Leuchtdiodenband nach Anspruch 1, **dadurch gekennzeichnet, dass** der erste Schenkel (S1) eine an das Ende der zweiten Vergußmasse (V2) angrenzende Nut (S1N) aufweist.

6. Leuchtdiodenband nach Anspruch 1, **dadurch gekennzeichnet, dass** der erste Schenkel (S1) eine Stufe (ST) aufweist, welche zur Positionierung als Anschlag für den flexiblen Leitungsträger (T) dient.

7. Leuchtdiodenband nach einem oder mehreren der Ansprüche 1 bis 6, **dadurch gekennzeichnet, dass** der zweite Schenkel (S2) auf der Basis (UB) des Gehäuses (U) gegenüberliegend ein stumpfes Ende aufweist.

8. Leuchtdiodenband nach einem oder mehreren der Ansprüche 1 bis 7, **dadurch gekennzeichnet, dass** die Lichtaustrittsfläche der zweiten Vergußmasse (V2) eine dreidimensionale Ausformung (STR*) aufweist.

9. Leuchtdiodenband nach Anspruch 8, **dadurch gekennzeichnet, dass** die dreidimensionale Ausformung (STR*) als Schrift oder dreidimensionale Kontur ausgestaltet ist.

10. Leuchtdiodenband nach einem oder mehreren der Ansprüche 1 bis 9, **dadurch gekennzeichnet, dass** die zweite Vergußmasse (V2) im Querschnitt in Dreiecksform oder als halbrunde 90° mit Hinterschnitt oder als rechteckige/quadratische 270° oder als Linse mit leichtem Hinterschnitt oder als rechteckige mit verbreiterter Abstrahlung geformt ist.

11. Verfahren zur Herstellung eines Leuchtdiodenbands nach **Anspruch 1, bei dem:**
a) eine zweite flüssige transluzente Vergußmasse (V2) in eine nach einer Seite hin offene Vergußform (F), deren Konturenverlauf als sich von dieser Seite senkrecht erstreckende Schenkel (FS1, FS2) und einem zur offenen Stirnseite sich erhebenden Füllrand (FR) ausgestaltet ist, derart eingefüllt wird, dass diese zwischen dem Füllrand (FR) und einer Überlaufkante (ÜK) der Vergußform (F) eine aufgrund des Kapillareffekts gekrümmte Oberfläche ausbildet,
b) das Kunststoffmaterial des Gehäuses (U) bis zur Überlaufkante (ÜK) der Vergußform (F) eingefüllt wird und dabei den ersten Schenkel (S1) und die Basis (UB) des U-förmigen Gehäuses (U) ausbildet,
c) der flexible Leitungsträger (T) mit den montierten Chip-Leuchtdioden (LED) in das U-förmige Gehäuse (U) an der Basis (UB) eingelegt wird,
d) die erste Vergußmasse (V1) bis zum inneren Rand der Basis (UB) und dem gegenüberliegenden Rand der zweiten Vergußmasse (V2) eingefüllt wird und
e) der zweite Schenkel (S2) des U-förmigen Gehäuses (U) bis zum äußeren Rand der Basis (UB) und dem gegenüberliegenden Rand der zweiten Vergußmasse (V2) eingefüllt wird.

## Claims

1. Light-emitting diode strip with a U-shaped housing (U), two legs (S1, S2) and a base (UB), with chip light-emitting diodes (LED) mounted at a flexible conductor carrier (T) and two in the emission direction of the chip light-emitting diodes (LED) one above the other and between the two legs (S1, S2) of the housing (U) arranged potting compounds (V1, V2), whereas said chip light-emitting diodes (LED) are arranged at said base (UB), **characterized in that** at least the first leg (S1) of the U-shaped housing (U) consists of a translucent second potting compound (V2) tapered in the wall thickness and passing in a plastic material of the housing (U) passing second potting compound (V2), that said flexible conductor carrier (T) is embedded in a first transparent potting compound (V1) and that the light of the chip light-emitting diodes (LED) is reflected from the inner surfaces of the housing (U) and diffused by the second potting compound (V2), wherein the light emitting diode strip is vertically elastic in the extension direction.

2. Light-emitting diode strip according to claim 1, **characterized in that** said plastic material of the housing (U) is enriched with heat-conductive fillers and therefore is thermally conductive.

3. Light-emitting diode strip according to claim 1, **characterized in that** said conductor carrier (T) is adhesively bonded to the base (UB) of the housing (U) or to the first leg (S1).

4. Light-emitting diode strip according to claim 1, **characterized in that** said conductor carrier (T) is heat-conducting.

5. Light-emitting diode strip according to Claim 1, **characterized in that** said first leg (S1) has a groove (S1N) adjoining the end of the second sealing compound (V2).

6. Light-emitting diode strip according to Claim 1, **characterized in that** said first leg (S1) has a step (ST), which for positioning serves as a stop for the flexible conductor carrier (T).

7. Light-emitting diode strip according to one or more of the claims 1 to 6, **characterized in that** said second leg (S2) has a blunt end opposite to the base (UB) of said housing (U).

8. Light-emitting diode strip according to one or more of the claims 1 to 7, **characterized in that** the light exit surface of said second potting compound (V2) has a 3-dimensional formation (STR*).

9. Light-emitting diode strip according to one or more of the claim 8, **characterized in that** said 3-dimensional formation (STR*) is formed as scripture or as a 3-dimensional contour.

10. Light-emitting diode strip according to one or more of the claims 1 to 9, **characterized in that** seen in the cross section said second potting compound (V2) is formed in a triangular form or in a semicircular 90° with undercut or in a rectangular / square 270° or as a lens with a slight undercut or as a rectangular with widened radiation.

11. A method for producing a light-emitting diode strip according to claim 1, **wherein:**
a) a second liquid translucent potting compound (V2) is filled in an casting mold (F), that opens towards one side and the contour of which is formed from this side as perpendicularly extending legs (FS1, FS2) and a filling edge (FR) rising towards the open end, in such a way, that it forms a curved surface due to the capillary effect between the filling edge (FR) and an overflow edge (UK) of the casting mold (B),
b) the plastic material of the housing (U) is filled to the overflow edge (UK) of the casting mold (F) and thereby forms the first leg (S1) and the base (UB) of the U-shaped housing (U),
c) the flexible conductor support (T) with the mounted chip light-emitting diodes (LED) is inserted in the U-shaped housing (U),
d) the first potting compound (V1) is filled to the inner edge of the base (UB) and the opposite edge of the second potting compound (V2) and
e) the second leg (S2) of the U-shaped housing (U) is filled to the outer edge of the base (UB) and the opposite edge of the second potting compound (V2).

## Revendications

1. Bande de diodes électroluminescentes avec un boîtier en forme d'U (U), deux branches (S1, S2) et une base (UB), avec des diodes électroluminescentes à puce (LED) montée sur un support de conducteur (T) et deux composé d'enrobage (V1, V2), celui montées superposée dans la direction d'émission des diodes électroluminescentes à puce (LED) et entre les deux branches (S1, S2) du boîtier en forme d'U (U), les diodes électroluminescentes à puce (LED) sont montée sur la base (UB), **caractérisée en ce que** au moins la première branche (S1) du boîtier en forme d'U (U) consistent d'une deuxième composé d'enrobage (V2), celui est translucide, l'épaisseur effilant en allant et passant dans une matière plastique du boîtier en forme d'U (U), **en ce que** le conducteur flexible (T) est intégré dans une premier composé d'enrobage transparent (V1) et **en ce que** la lumière de la diode électroluminescente à puce (LED) est réfléchie par les surfaces internes du boîtier en forme d'U (U) et est diffusé par le second composé d'enrobage (V2) sur la face avant, à condition que la bande de diodes électroluminescentes étant flexible dans la direction d'extension.

2. Bande de diode électroluminescente selon la revendication 1, **caractérisée en ce que** la matière plastique du boîtier en forme d'U (U) est enrichie en charges thermoconductrices et alors thermiquement conductrice.

3. Bande de diode électroluminescente selon la revendication 1, **caractérisée en ce que** le support de conducteur (T) est collé à la base (UB) du boîtier en forme d'U (U) ou à la première branche (S1).

4. Bande de diode électroluminescente selon la revendication 1, **caractérisée en ce que** le support de conducteur (T) est conducteur de la chaleur.

5. Bande de diode électroluminescente selon la revendication 1, **caractérisée en ce que** la première branche (S1) présente une gorge (S1N) adjacente à l'extrémité du deuxième composé d'enrobage (V2).

6. Bande de diode électroluminescente selon la revendication 1, **caractérisée en ce que** la première branche (S1) à une marche (ST), qui sert pour positionnement comme butée du support de conducteur flexible (T).

7. Bande de diode électroluminescente selon une ou plusieurs des revendications 1 à 6, **caractérisée en ce que** la deuxième branche (S2) à une extrémité émoussée opposé à la base (UB) du boîtier en forme d'U (U).

8. Bande de diode électroluminescente selon une ou plusieurs des revendications 1 à 7, **caractérisée en ce que** la surface de sortie de lumière du deuxième composé d'enrobage (V2) à des formations tridimensionnelles (STR*).

9. Bande de diode électroluminescente selon la revendication 8, **caractérisée en ce que** les formations tridimensionnelles (STR*) sont une écriture ou comme un contour tridimensionnel.

10. Bande de diode électroluminescente selon une ou plusieurs des revendications 1 à 9, **caractérisée en ce que** vue en coupe transversale de la deuxième composé d'enrobage (V2) est une forme triangulaire ou une forme de demi-cercle à 90 ° avec dépouille ou une forme de rectangle / carré à 270 °ou conçue comme une lentille avec une légère dépouille ou une forme rectangulaire à rayonnement élargi.

11. Procédé de production d'une bande de diodes électroluminescentes selon la revendication 1, **dans lequel:**
a) un deuxième composé d'enrobage liquide translucide (V2) est rempli dans un moule de coulée(F) ouvert vers un côté, dont le contour part de ses jambes (FS1, FS2) s'étendant perpendiculairement un bord de remplissage (FR) s'élevant vers l'extrémité ouverte, de manière à former une surface incurvée du fait de l'effet capillaire entre le bord de remplissage (FR) et un bord de débordement (ÜK) du moule de coulée (F),
b) du matériau plastique du boîtier (U) est rempli jusqu'au bord de débordement (ÜK) du moule de coulée (F) et forme ainsi la première jambe (S1) et la base (UB) du boîtier en forme d'U (U),
c) le support de conducteur flexible (T) avec les diodes électroluminescentes à puce (LED) est insérée dans la base (UB) du boîtier en forme de U (U),
d) le premier composé d'enrobage (V1) est rempli jusqu'au bord intérieur de la base (UB) et au bord opposé du deuxième composé d'enrobage (V2) et
e) la deuxième jambe (S2) du boîtier en forme d'U (U) est remplie jusqu'au bord extérieur de la base (UB) et le bord opposé du deuxième composé d'enrobage (V2).
